# DEMANDE DE BREVET EUROPEEN

(11) **EP 1 375 264 A1**
(43) Date de publication de la demande: **02.01.2004**
(21) Numéro de dépôt: 03291564.7
(22) Date de dépôt: 25.06.2003
(51) Int. Cl.: B60R 21/20

(54) **Element d'un module de securite comprenant un systeme à coussin gonflable, notamment pour siège de vehicule automobile et méthode de fabrication**

(30) Priorité: 26.06.2002 FR 0207945
(71) Demandeur: Centre d'Etude et de Recherche pour l'Automobile ( CERA), 51100 Reims (FR)
(72) Inventeur: Albacete, Joan Manel, 17458 Fornells De La Selva, Girona (ES)
(74) Mandataire: Geismar, Thierry

(57) **Abrégé**

L'invention concerne un élément (1) d'un module de sécurité comprenant un système à coussin gonflable (3), ledit élément (1) étant formé d'un corps en mousse (2) comprenant un logement (4) destiné à recevoir ledit système (3), ledit logement (4) étant obturé du côté externe (5) par une couche de matériau (6), ladite couche (6) comprenant une zone déchirable apte, sous l'effet du déplacement de la couche (6) qui est induit par le gonflement dudit coussin (15), à permettre l'ouverture du logement (4), ledit élément (1) étant caractérisé en ce qu'un film de séparation (11) est prévu sur au moins une partie de la face interne (12) de la couche (6) qui est disposée en regard de la mousse.

## Description

L'invention concerne un élément d'un module de sécurité comprenant un système à coussin gonflable, ainsi qu'un procédé de réalisation d'un tel élément.

Les modules de sécurité comprenant des systèmes à coussin gonflable disposés dans l'habitacle des véhicules automobiles ont pour fonction, en cas de choc, de protéger les passagers en s'interposant entre ces derniers et tout élément potentiellement dangereux de la structure du véhicule automobile.

Pour ce faire, chaque système est connecté à un dispositif de détection de choc. Au moment du choc, l'activation de ce dispositif entraîne le gonflement immédiat du coussin, et sa sortie du module de sécurité dans lequel il était stocké à l'état plié.

Dans une application particulière, les systèmes à coussin gonflable sont destinés à protéger les passagers en cas de choc latéral. Les modules de sécurité comprenant ces systèmes peuvent être disposés dans les dossiers des sièges de véhicule automobile, lesdits modules comprenant un élément en mousse pourvu d'une couture agencée pour se déchirer sous l'effet du gonflement du coussin.

De nombreux éléments de sièges de véhicule automobile peuvent être formés par la technique de moulage dite « in situ ». Cette technique consiste à injecter un mélange précurseur de mousse dans un moule dont la paroi interne a été au préalable recouverte d'un revêtement, généralement textile. Elle présente l'avantage de permettre directement l'obtention de l'élément de siège, en sortie de moule.

Toutefois, dans ce type de sièges munis d'un module de sécurité comprenant un système à coussin gonflable, le gonflement du coussin fait non seulement éclater une couture prévue à cet effet, mais a également pour conséquence la projection de morceaux de mousse. Ces derniers, bien que légers, sont projetés à une vitesse telle qu'ils peuvent occasionner de sérieuses blessures aux occupants du véhicule, notamment aux yeux.

Pour pallier cet inconvénient, on connaît déjà, en particulier du document FR-2 753 425, des éléments de siège de véhicule automobile obtenus par moulage « in situ », et comprenant un coussin gonflable disposé dans une poche, de telle sorte que le coussin ne soit pas en contact avec la mousse.

Ainsi, le gonflement du coussin n'entraîne pas de projection de mousse, celle-ci étant disposée à l'extérieur de la poche.

Ces éléments ont l'inconvénient de présenter des contraintes d'intégration du système de sécurité qui sont importantes, notamment pour des raisons géométriques.

Pour remédier notamment à cet inconvénient, l'invention propose un élément d'un module de sécurité comprenant un système à coussin gonflable, permettant d'éviter toute projection de mousse lors du gonflement du coussin, et ce par un agencement simple et compatible avec la technique de moulage dite « in situ ».

A cet effet, et selon un premier aspect, l'invention propose un élément d'un module de sécurité comprenant un système à coussin gonflable, ledit élément étant formé d'un corps en mousse comprenant un logement destiné à recevoir ledit système, ledit logement étant obturé du côté externe par une couche de matériau, ladite couche comprenant une zone déchirable apte, sous l'effet du déplacement de la couche qui est induit par le gonflement dudit coussin, à permettre l'ouverture du logement, ledit élément comprenant un film de séparation prévu sur la totalité de la face interne de la couche qui est disposée en regard de la mousse, la périphérie dudit film étant associée par couture à la périphérie de la couche, ledit film étant déchirable sous l'effet du gonflement du coussin.

Selon un mode de réalisation, le corps en mousse est pourvu d'un revêtement auquel la couche est associée par couture de sa périphérie sur le revêtement.

Selon un deuxième aspect, l'invention a pour objet un procédé de réalisation d'un tel élément, comprenant les étapes consistant à :
- associer la couche de matériau au revêtement, et le film de séparation à la couche, de sorte à former l'enveloppe du corps en mousse ;
- disposer ladite enveloppe dans la matrice d'un moule, de telle sorte que le film de séparation ne soit pas en contact avec ladite matrice ;
- injecter un mélange précurseur de mousse dans ladite enveloppe, de sorte à obtenir, après expansion de la mousse, un corps de mousse comprenant un logement destiné à recevoir le système à coussin gonflable ;
- disposer le système à coussin gonflable dans le logement prévu à cet effet.

D'autres objets et avantages de l'invention apparaîtront au cours de la description qui suit, faite en référence aux dessins annexés dans lesquels :
- la figure 1 est une vue schématique en coupe partielle d'un élément d'un module de sécurité selon l'invention, dans lequel le système à coussin gonflable est stocké à l'état plié, selon un mode de réalisation ;
- la figure 2 est une vue schématique en coupe de l'élément de la figure 1, montrant l'élément après déclenchement du système à coussin gonflable.

Le module de sécurité dont fait partie l'élément selon l'invention a pour fonction d'assurer la sécurité des passagers d'un véhicule automobile, grâce à un coussin gonflable dont le gonflement se déclenche lors d'un choc.

L'élément 1 d'un tel module de sécurité comprend de façon générale un corps en mousse 2, et un système à coussin gonflable 3 disposé dans un logement 4 du corps en mousse 2 prévu à cet effet.

Dans le mode de réalisation représenté, cet élément 1 fait partie du dossier d'un siège de véhicule automobile. Dans la suite de la description, on désignera par « externes » les zones tournées vers l'habitacle du véhicule, et par « internes » les zones tournées vers l'intérieur du siège.

Le système à coussin gonflable 3 comprend typiquement un coussin gonflable et des moyens de gonflement dudit coussin.

Le logement 4 destiné à recevoir le système à coussin gonflable 3 est obturé du côté externe 5 par une couche de matériau 6 qui est associée au corps en mousse 2 de part et d'autre du logement 4. Cette couche 6 comprend une zone déchirable apte à permettre l'ouverture du logement 4 et la libération du coussin gonflable, comme cela sera expliqué plus loin.

Selon le mode de réalisation représenté, la zone déchirable de la couche de matériau 6 est une couture 7 de moindre résistance. Cette couture 7 est située au voisinage des bords 8 du logement 4 de sorte, une fois déchirée, à permettre le passage du coussin.

Cette couture 7 présente l'avantage d'être d'aspect identique aux autres coutures de l'élément 1, de telle sorte que les passagers ne peuvent pas la distinguer par rapport aux autres coutures présentes. Ainsi, la localisation du système à coussin gonflable 3 n'est pas identifiable par les occupants du véhicule, ce qui permet d'éviter notamment des gestes malencontreux pouvant détériorer ledit système.

Le corps en mousse 2 est pourvu d'un revêtement 9 auquel la couche de matériau 6 est associée par couture 10 de sa périphérie sur le revêtement 9.

En particulier, la couche 6 et le matériau 9 peuvent être formés du même matériau, notamment un matériau textile, l'ensemble formé par la couche 6 et le revêtement 9 constituant dans ce cas l'enveloppe du corps en mousse 2.

Selon l'invention, l'élément 1 comprend en outre un film de séparation 11 prévu sur la totalité de la face interne 12 de la couche 6 qui est disposée en regard de la mousse 2, de sorte à empêcher localement le contact entre la mousse 2 et la couche de matériau 6.

Dans un exemple particulier, ce film 11 est en polyéthylène.

Dans la réalisation représentée, la périphérie dudit film 11 est associée par couture 10 à la périphérie de la couche 6. Ce film 11, notamment du fait de sa faible épaisseur, est déchirable sous l'effet du gonflement du coussin.

En outre, comme représenté sur les figures, la périphérie du logement 4 qui est adjacente à la couture déchirable 7 est pourvue d'une nappe 13, par exemple en non-tissé.

Cette nappe est agencée, notamment du fait de sa résistance mécanique, pour contribuer à éviter la projection de mousse lors du gonflement du coussin 14. En effet, elle a pour fonction principale de confiner la mousse dans l'élément 1.

En variante, non représentée, cette nappe 13 peut être disposée de sorte à recouvrir en outre une partie du corps en mousse 2 en contact avec le film de séparation 11.

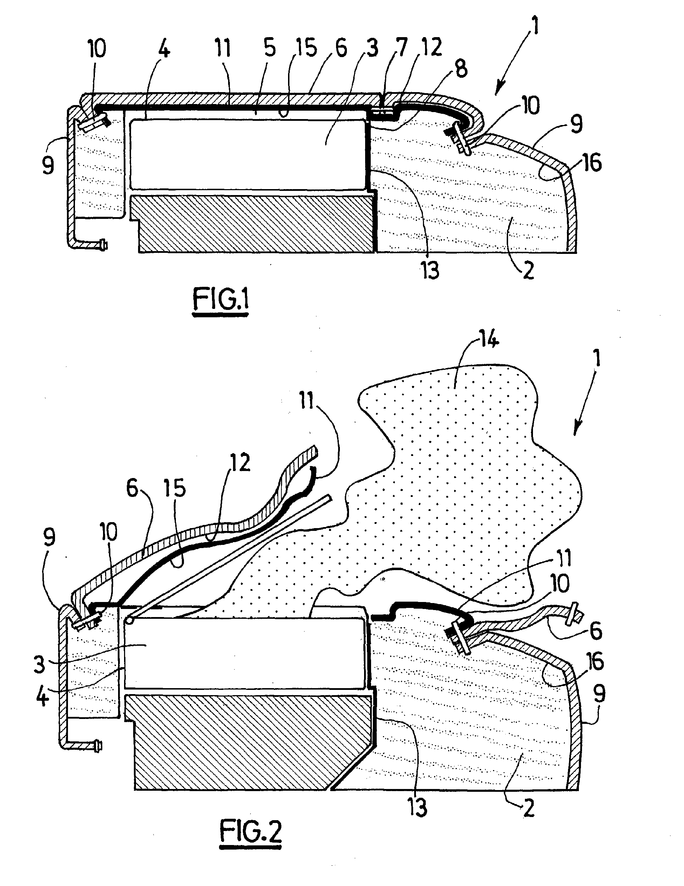

On décrit à présent le procédé de réalisation de l'élément 1 représenté sur les figures 1 et 2.

Cet élément 1 est obtenu par la technique de moulage dite in situ.

La couche de matériau 6 munie d'une couture déchirable 7 est tout d'abord associée au revêtement 9 par couture, le film de séparation 11 étant également associé à ladite couche 6 par couture.

L'ensemble formé par le revêtement 9 et par la couche 6 associée au film 11 forme ainsi une enveloppe destinée à entourer le corps en mousse 2. Cette enveloppe est disposée dans la matrice d'un moule, de manière que le film de séparation 11 ne soit pas en contact avec la matrice du moule.

Un mélange précurseur de mousse est injecté dans le moule, le moule étant prévu pour que, lors de l'injection de ce mélange, un logement 4 destiné à recevoir le système à coussin gonflable 3 soit formé au sein de la mousse.

Le mélange précurseur de mousse est donc injecté dans l'enveloppe, sur au moins une partie de la face interne 15 du film de séparation 11, et sur la face interne 16 du revêtement 9.

Ainsi, lorsque la mousse est dans son état expansé, la zone de contact entre la mousse et l'enveloppe est formée uniquement par la face interne 16 du revêtement 9, la présence du film de séparation 11 empêchant le contact direct entre la mousse et la surface interne 12 de la couche 6.

Le système à coussin gonflable 3 est ensuite disposé dans le logement 4 prévu à cet effet, de sorte à obtenir l'élément 1 du module de sécurité souhaité.

On décrit à présent, en relation avec la figure 2, le fonctionnement d'un tel élément 1, sous l'effet d'un choc latéral sur le véhicule.

Lorsque le dispositif de détection de choc associé au coussin gonflable 14 est activé, le gonflement du coussin 14 dans le logement 4 a pour effet de déplacer la couche de matériau 6 qui obture le côté externe 5 du logement 4, et de déplacer simultanément le film 11 associé à ladite couche 6.

Le déplacement de la couche 6 et du film 11 entraîne le déchirement de la couture déchirable 7 de la couche 6, ainsi que le déchirement du film 11, de telle sorte que le logement 4 puisse s'ouvrir.

L'ouverture du logement 4 permet au coussin 14, tout en continuant à se gonfler, d'être libéré vers l'extérieur de l'élément 1 et d'assurer ainsi sa fonction de protection.

Grâce à la présence du film de séparation 11 entre la couche de matériau 6 et la mousse, la couche de matériau 6 n'entraîne pas la mousse dans son déplacement. Ainsi, le gonflement du coussin 14 ne provoque pas de projections de mousse, à l'intérieur de l'habitacle du véhicule automobile, susceptibles de causer des blessures aux occupants.

En outre, la présence du film de séparation 11 permet d'éviter l'enrobage de la couture déchirable 7 dans la mousse, ce qui aurait pour conséquence d'une part d'augmenter sa résistance à la déchirure, et d'autre part de risquer une projection de mousse induite par la déchirure.

Dans le mode de réalisation représenté, le fait que la couche 6 soit associée par couture au revêtement 9 présente l'avantage de permettre un maintien ferme de ladite couche 6 à l'endroit de cette couture 10. Ainsi, lors du gonflement du coussin 15, le déplacement de la couche 6 est limité et ne provoque pas le déplacement du reste de l'enveloppe.

## Revendications

1. Elément (1) d'un module de sécurité comprenant un système à coussin gonflable (3), ledit élément (1) étant formé d'un corps en mousse (2) comprenant un logement (4) destiné à recevoir ledit système (3), ledit logement (4) étant obturé du côté externe (5) par une couche de matériau (6), ladite couche (6) comprenant une zone déchirable apte, sous l'effet du déplacement de la couche (6) qui est induit par le gonflement dudit coussin (14), à permettre l'ouverture du logement (4), ledit élément (1) étant **caractérisé en ce qu'**un film de séparation (11) est prévu sur la totalité de la face interne (12) de la couche (6) qui est disposée en regard de la mousse, la périphérie dudit film (11) étant associée par couture (10) à la périphérie de la couche (6), ledit film (11) étant déchirable sous l'effet du gonflement du coussin (14).

2. Elément selon la revendication 1, **caractérisé en ce que** le corps en mousse (2) est pourvu d'un revêtement (9) auquel la couche (6) est associée par couture (10) de sa périphérie sur le revêtement (9).

3. Elément selon l'une quelconque des revendications 1 ou 2, **caractérisé en ce que** la zone déchirable de la couche (6) est une couture (7) de moindre résistance.

4. Elément selon l'une des revendications 2 ou 3, **caractérisé en ce que** la couche (6) et le revêtement (9) sont formés du même matériau.

5. Elément selon l'une des revendications 1 à 4, **caractérisé en ce que** le film de séparation (11) est formé de polyéthylène.

6. Elément selon l'une des revendications 1 à 5, **caractérisé en ce qu'**il comprend en outre une nappe (13) disposée sur au moins une partie de la périphérie du logement (4).

7. Procédé de réalisation d'un élément d'un module de sécurité selon l'une des revendications 2 à 6, comprenant les étapes consistant à :
- associer la couche de matériau (6) au revêtement (9), et le film de séparation (11) à la couche (6), de sorte à former l'enveloppe du corps en mousse (2) ;
- disposer ladite enveloppe dans la matrice d'un moule, de telle sorte que le film de séparation (11) ne soit pas en contact avec ladite matrice ;
- injecter un mélange précurseur de mousse dans ladite enveloppe, de sorte à obtenir, après expansion de la mousse, un corps de mousse (2) comprenant un logement (4) destiné à recevoir le système à coussin gonflable (3) ;
- disposer le système à coussin gonflable (3) dans le logement (4) prévu à cet effet.
